# EUROPEAN PATENT SPECIFICATION

(11) **EP 3 826 827 B1**
(45) Date of publication and mention of the grant of the patent: **30.11.2022**
(21) Application number: 19758506.0
(22) Date of filing: 15.07.2019
(51) Int. Cl.: B29D 30/16, B29D 30/28, B29D 30/30

(54) **PROCESS AND EQUIPMENT FOR MAKING TYRES FOR VEHICLE WHEELS**
VERFAHREN UND AUSRÜSTUNG ZUR HERSTELLUNG VON REIFEN FÜR FAHRZEUGRÄDER
PROCÉDÉ ET ÉQUIPEMENT DE FABRICATION DE PNEUMATIQUES POUR ROUES DE VÉHICULE

(30) Priority: 24.07.2018 IT 201800007455
(43) Date of publication of application: 02.06.2021
(73) Proprietor: Pirelli Tyre S.p.A., 20126 Milano (IT)
(72) Inventor: AMURRI, Cesare Emanuele, 20126 Milano (IT); CANTU', Marco, 20126 Milano (IT); DE COL, Christian, 20126 Milano (IT)
(74) Representative: Tansini, Elio Fabrizio
(86) International application number: PCT/IB2019/056009
(87) International publication number: WO 2020/021381

(56) References cited:
- WO-A1-2016/097908
- US-A1- 2013 037 203

## Description

The present invention relates to a process and an apparatus for building tyres for vehicle wheels.

A tyre for vehicle wheels generally comprises a carcass structure comprising at least one carcass ply having respectively opposite end flaps engaged with respective annular anchoring structures, integrated in the areas usually identified by the name of "beads", having an inner diameter substantially corresponding to a so-called "fitting diameter" of the tyre on a respective mounting rim.

The carcass structure is associated with a belt structure which may comprise one or more belt layers, arranged in radial superposition with respect to each other and with respect to the carcass ply, having textile or metallic reinforcing cords with crossed orientation and/or substantially parallel to the circumferential development direction of the tyre (at 0 degrees). A tread band is applied in a position radially outer to the belt structure, also made of elastomeric material like other semifinished products making up the tyre.

Respective sidewalls of elastomeric material are further applied in an axially outer position on the lateral surfaces of the carcass structure, each extending from one of the lateral edges of the tread band up at the respective annular anchoring structure to the beads. In "tubeless" tyres, an airtight coating layer, usually called "liner", covers the inner surfaces of the tyre.

After the building of the green tyre, carried out by assembling respective components, a moulding and vulcanisation treatment is generally carried out in order to determine the structural stabilisation of the tyre through cross-linking of the elastomeric compositions, as well as to impart a desired tread pattern onto the same, where required, and any distinguishing or information graphic signs at the tyre sidewalls.

The terms "radial" and "axial" and the expressions "radially inner/outer" and "axially inner/outer" are used referring to the radial direction of a tyre or of a forming drum (i.e. to a direction perpendicular to the rotation axis of the tyre or of the forming drum) and to the direction of the axes of rotation of the tyre or of the forming drum. A radial plane of the tyre or of the forming drum contains the respective rotation axis.

The term "elastomeric material" is used to designate a composition comprising at least one elastomeric polymer and at least one reinforcement filler. Preferably, such composition further comprises additives such as, for example, a cross-linking agent and/or a plasticiser. Due to the presence of the cross-linking agent, such material can be cross-linked by heating, so as to form the final manufactured article.

The term "spiral"/"spiralling" means an operation in which at least one continuous elongated element made of raw elastomeric material, for example in the form of a tape, is circumferentially wound around a geometric axis, to form a plurality of coils respectively approached in the axial direction and/or superimposed in the radial direction.

The term "structural component" refers to tyre components which integrate structural reinforcement elements typically in the form of metal, textile or hybrid cords. For example, the carcass ply/plies, the belt layers and the bead cores are structural components.

The term "elastomeric component" means a component of the tyre made of elastomeric material in the absence of cords or other structural reinforcement elements. The elastomeric material may, however, incorporate binding or reinforcing fillers, for example in the form of dispersed fibres. Elastomeric components are for example the tread band, the sidewalls, the underlayer, the liner, the under-liner, the anti-abrasive elements, the filler inserts or other components in elastomeric material of the tyre.

In modern building plants for tyres for vehicle wheels, one or more elastomeric components of a tyre are made by spiralling. In the manufacture of some elastomeric components, however, the coupling of two or more different elastomeric materials may be required. For example, some tread bands made of an elastomeric material containing a silica filler, typically non-conductive, require the incorporation of one or more inserts of conductive elastomeric material, which can promote the electrical conductivity between the tyre and the roadway. US-2003/209329 on behalf of the same Applicant, provides for the use of spiralling for making the tread band, the sidewalls, and/or of other components of the tyre. For this purpose, an elongated elastomeric material element is dispensed by an extruder, directly onto a deposition surface carried by a forming drum. The forming drum is rotated about its own geometric axis, and suitably moved in front of the outlet nozzle of the extruder so as to determine the distribution of the continuous elongated element according to a plurality of coils arranged mutually side by side and/or superimposed according to one or more layers, until the component is made according to the desired geometric and dimensional parameters.

US 2013/0133811 provides for making a tread band by the simultaneous spiralling of two continuous ribbon-like elements delivered by respective extruders directly onto the deposition surface of a forming drum actuated in rotation. One of the extruders comprises two distinct mixing units, used for the processing of a non-conductive compound and a conductive compound, respectively, which flow into a same extrusion nozzle. The mixing unit used for the processing of the conductive compound can be selectively activated and deactivated during processing, to determine in case of need the dispensing of a ribbon-like conductive insert, together with the respective ribbon-like element coming out of the extrusion head. US2006/0096697 proposes a method for building a tyre in which the construction of the tread band provides that a cylindrical top portion is formed on a substantially cylindrical forming drum by means of a simultaneous spiralling of a non-conductive continuous elongated element and a conductive elongated insert, by means of respective applicators, each comprising a belt conveyor. Each belt conveyor continuously feeds the respective elongated element or insert into a predetermined winding position on the surface of the forming drum. The elongated element and insert each come continuously from a respective dispenser, in particular an extruder or a calender, located upstream of the belt conveyor, after interposition of a festoon through which the control of the outlet speed from the dispenser is carried out. The applicator is supported by a movement unit, and is alternatively movable at least along an axial direction with respect to the forming drum.

US2013/037203 provides a further example of known arrangement for controlling deposition of a continuous elongated element in building a tire for vehicle wheel.

The Applicant has observed that the current production systems entail certain limits, in particular where the dispensing, in particular in the form of an extrusion, of an insert for short periods and/or alternately during the deposition by spiralling of the tread band or other elastomeric component of the tyre being processed is required.

In particular, the Applicant has perceived some difficulties in coordinating with due precision the positioning of the insert within the elastomeric component in the manufacturing step, and/or with respect to other components of the tyre being processed. Furthermore, increases in processing times may occur where the interruption and reactivation of the feeding (by extrusion) of the insert during the construction of the tread band or other elastomeric component of the tyre is required.

In this regard, it has been observed that starting and stopping the dispensing of the material from the outlet nozzle of an extruder does not coincide exactly with the start and stop of the extruder itself, but takes place in response thereto with a certain delay, the amount of which depends on a series of factors (e.g. viscosity of the compounds, temperatures, feeding pressures, etc.) which are difficult to predict and/or control. Moreover, during the start-up and shut-down steps of the extruder, the elastomeric material in output undergoes a change in its section/profile.

The Applicant has therefore noted that the need to manage the start and the interruption of the dispensing of the elastomeric material from one or more extruders may involve undesired dead times and uncertainties in the control of the dispensing, particularly in the transients immediately following the start and/or the interruption of the extruder operation.

The Applicant has therefore perceived the possibility of favouring a greater immediacy of response in the steps of starting and interrupting the feeding of a first continuous elongated element, formed by a first raw elastomeric material (for example made of conductive elastomeric material), during the formation of a layer of an elastomeric component by spiralling a second continuous elongated element, made of a second raw elastomeric material (for example made of non-conductive elastomeric material) different from the first raw elastomeric material.

More precisely, the Applicant has found that the use of said first continuous elongated element if preformed is previously stored on a reel or other collector arranged in the vicinity of the workstation used for the production of said elastomeric component (for example of a tread band) allows achieving an appreciable reduction in downtime and a qualitative increase in the product obtained. The first continuous elongated element is in fact readily available for the purpose of the insertion thereof in the elastomeric component being made, thus reducing or eliminating the downtime determined by the start and stop transients of the extruders used according to the prior art. The system's greater promptness of response also allows positioning the insert made with said first continuous elongated element with greater precision inside the elastomeric component being built, thus improving the quality features of the product obtained.

In particular, the present invention relates to a process for building tyres for vehicle wheels, according to claim 1. According to a further aspect thereof, the present invention relates to an apparatus for manufacturing tyres for vehicle wheels, according to claim 10.

The Applicant believes that the insert made by means of said first preformed continuous elongated element lends itself to be easily introduced very quickly and at any time during the formation of a layer of said elastomeric component formed by said second continuous elongated element, without being necessary to interrupt the dispensing/extrusion of the latter during the building. Therefore, an accurate positioning of the insert in the respective elastomeric component of the tyre being processed is facilitated, in response to the production requirements. The Applicant also believes that by eliminating the need to interrupt and restore the dispensing of a continuous elongated element coming from an extruder, or from a calendering unit and the like, it is possible to significantly increase the productivity and improve the quality of the product obtained.

In at least one of the aforementioned aspects, the invention comprises one or more of the following preferred features which are described below.

Preferably, the forming of the deposition layer comprises forming on the deposition surface a first end portion of said deposition layer, extending from a first lateral edge of the elastomeric component.

Preferably, the forming of the deposition layer comprises winding the first continuous elongated element to form a central portion of the deposition layer extending from the first end portion. Preferably, the forming of the deposition layer comprises forming on the deposition surface a second end portion of said deposition layer, extending from the central portion to a second lateral edge of the elastomeric component.

Preferably, the winding of the first continuous elongated element takes place simultaneously with the deposition of the second continuous elongated element at the central portion of the deposition layer.

Preferably, it is provided to axially translate the forming drum during the forming of the deposition layer, wherein with the winding of the first continuous elongated element, an increase of the axial translation speed of the forming drum is actuated. Preferably, the winding of the first continuous elongated element comprises arranging an end stretch of the first continuous elongated element against an applicator arranged in the vicinity of the forming drum.

Preferably, the winding of the first continuous elongated element comprises dragging the first continuous elongated element in the rotation of the forming drum.

Preferably, during the dragging, the first continuous elongated element is subjected to a pressing by an auxiliary presser operating in a position spaced from the applicator along a circumferential direction with respect to the deposition surface.

Preferably, the auxiliary presser is approached to the forming drum before approaching the applicator.

Preferably, the winding of the first continuous elongated element is interrupted by keeping the forming drum in rotation, by the action of removing the applicator from the forming drum while maintaining the action of the auxiliary presser against the first continuous elongated element.

Preferably, the winding of the first continuous elongated element is interrupted by keeping the forming drum in rotation, by the action of retaining the first continuous elongated element at the applicator to break the same due to the effect of a traction action generated between the applicator and the auxiliary presser.

Preferably, it is provided that the action of retaining the first continuous elongated element comprises braking the rotation of an applicator roller constituting said applicator.

Preferably, retaining the first continuous elongated element comprises braking the latter against the applicator by means of a locking element movable towards the applicator.

Preferably, the first continuous elongated element is stored by spiralling the first continuous elongated element on a feeding reel.

Preferably, forming said first continuous elongated element comprises: extruding a continuous elongated element; applying a removable protective tape along at least one side of said continuous elongated element.

Preferably, the action of removing the protective tape from the first continuous elongated element is provided during the winding of the latter.

Preferably, the protective tape is removed from the first continuous elongated element in an area of application of the first continuous elongated element itself against a deposition surface.

Preferably, during the winding of the first continuous elongated element, the protective tape is driven away from the first continuous elongated element itself downstream of the applicator.

Preferably, the second continuous elongated element is made by extrusion through said dispenser.

Preferably, each of said first continuous elongated element and second continuous elongated element is shaped like a flattened ribbon.

Preferably, in a cross-section plane, the first continuous elongated element has a width greater than a width of the second continuous elongated element.

Preferably, the first continuous elongated element is deposited on a deposition surface in a symmetrically centred position with respect to an adjacent circumferential coil formed by the second continuous elongated element.

Preferably, each of the circumferential coils formed by the first continuous elongated element is placed in a symmetrically centred position with respect to the adjacent coils formed by the second continuous elongated element.

Preferably, the first continuous elongated element has, in each of the circumferential coils formed thereby around the deposition surface, longitudinal edges projecting with respect to the adjacent coils formed by the second continuous elongated element.

Preferably, said devices for relative movement between the forming drum and the dispenser distribute the second continuous elongated element defining in said at least one deposition layer, respectively opposite lateral edges of an elastomeric component of a tyre being processed.

Preferably, said movement devices comprise an anthropomorphic robotic arm having at least six movement axes.

Preferably, said applicator is movable towards and away from a deposition surface of the forming drum.

Preferably, said applicator is movable between a rest condition in which it is spaced from a deposition surface, and a working condition in which it operates in thrust relation towards the deposition surface.

Preferably, the selective activation devices are configured to move the applicator between the rest condition and the working condition.

Preferably, the selective activation devices comprise a bracket oscillatably constrained with respect to the dispenser and carrying said applicator, and an activation actuator operating on the bracket to move the applicator between a rest condition and a working condition.

Preferably, the applicator comprises an applicator roller. Preferably, the bracket is tilting about an oscillation axis parallel to a rotation axis of the applicator roller.

Preferably, an auxiliary presser is provided, configured to operate on the deposition surface in a position spaced from the applicator along a circumferential direction.

Preferably, the auxiliary presser is movable in approaching and moving away from the deposition surface.

Preferably, the auxiliary presser is movable between a rest condition in which it is spaced from the deposition surface, and a working condition in which it operates in thrust relation towards the deposition surface.

Preferably, the selective activation devices are configured to move the auxiliary presser between the rest condition and the working condition.

Preferably, the selective activation devices comprise a slider oscillatably constrained with respect to the dispenser and carrying said auxiliary presser, and a thrust actuator operating on the slider to move the auxiliary presser between the rest condition and the working condition.

Preferably, the auxiliary presser comprises an auxiliary pressure roller.

Preferably, the slider is slidably guided along a substantially radial direction with respect to the deposition surface. Preferably, the bracket is oscillatably constrained to the slider. Preferably, the oscillation axis of the bracket coincides with a rotation axis of the auxiliary pressure roller.

Preferably, guide devices are further provided, configured for operating on the first continuous elongated element coming from the feeding reel and guiding it between the application surface of the forming drum and the applicator.

Preferably, a removal assembly is operatively associated with said applicator for removing a protective tape from the first continuous elongated element coming from the feeding reel. Preferably, the removal assembly comprises a tow roller and a counter-roller operating against the tow roller for retaining the protective tape interposed therebetween.

Preferably, the tow roller is connected to the applicator roller by means of kinematic transmission members.

Preferably, the applicator roller, the tow roller and the kinematic transmission members are configured for actuating the tow roller according to a peripheral speed equal to or slightly greater than the peripheral speed of the applicator roller.

Preferably, a suction duct is provided having an end arranged at the tow roller for collecting the protective tape exiting the removal assembly.

Preferably, a primary presser is provided, configured for operating on the deposition surface along an output direction of the second continuous elongated element from said dispenser. Preferably, the primary presser is movable in approaching and moving away from the deposition surface.

Preferably, the primary presser is movable between a rest condition in which it is spaced from a deposition surface, and a working condition in which it operates in thrust relation towards the deposition surface.

Preferably, the primary presser comprises a primary pressure roller.

Preferably, the primary presser operates against the deposition surface in a position interposed between the dispenser and the applicator.

Preferably, a locking element is provided, movable towards the applicator for retaining the first continuous elongated element against the applicator.

Further features and advantages will become more apparent from the detailed description of a preferred but non-exclusive embodiment of a process and an apparatus for building tyres for vehicle wheels according to the present invention.

Such description is given hereinafter with reference to the accompanying drawings, provided only for illustrative and, therefore, non-limiting purposes, in which:
- figure 1 shows a lateral view of an apparatus according to the present invention, in the rest step;
- figure 2 shows the apparatus of figure 1 during the spiralling of a second continuous elongated element;
- figure 3 shows the apparatus of the preceding figures during the positioning of an auxiliary pressure roller against the deposition surface;
- figure 4 shows the apparatus during the spiralling of a first one at the same time as the spiralling of the second continuous elongated element;
- figure 5 shows the apparatus during the breaking of the second continuous elongated element at the end of the spiralling thereof;
- figures 6a and 6b show a cross-sectional view of the first continuous elongated element and of the second continuous elongated element;
- figure 7 schematically shows a cross-sectional view of a deposition layer formed by spiralling the first continuous elongated element and the second continuous elongated element;
- figure 8 shows a cross-sectional view of a tyre obtainable by the present invention.

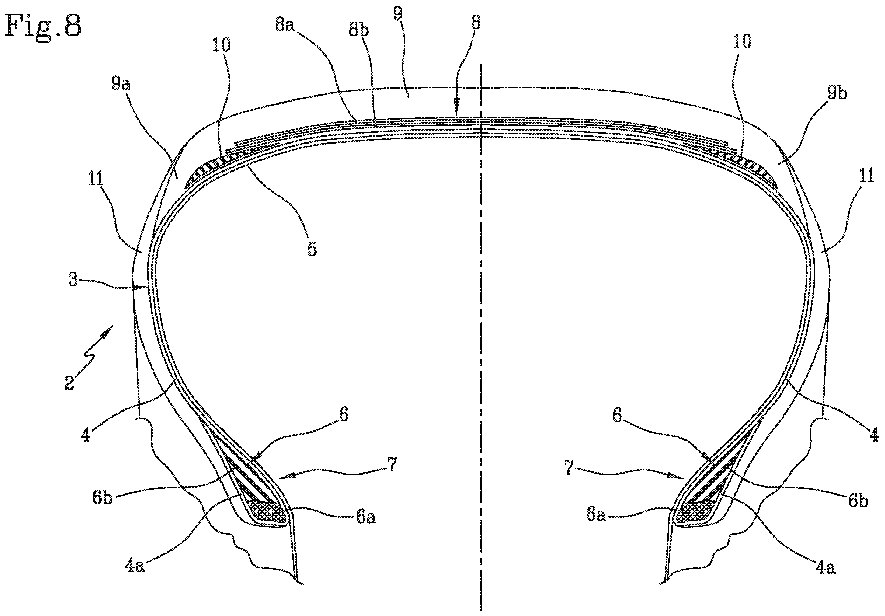

With reference to the accompanying figures, reference numeral 1 indicates as a whole an apparatus for building tyres for vehicle wheels, according to the present invention. The apparatus 1 is conveniently usable for making tyres 2 (figure 8) comprising essentially a carcass structure 3 having at least one carcass ply 4. An airtight layer of elastomeric material or so-called liner 5 may be applied internally to the carcass ply/plies 4. Two annular anchoring structures 6 comprising each a so-called bead core 6a bearing an elastomeric filler 6b in radially outer position are engaged to respective end flaps 4a of the carcass ply or plies 4. The annular anchoring structures 6 are integrated in the proximity of zones usually identified by the name of "beads" 7, at which the engagement between tyre 2 and a respective mounting rim usually occurs.

A belt structure 8 comprising one or more belt layers 8a, 8b is circumferentially applied around the carcass ply/plies 4, and a tread band 9 is circumferentially superimposed on the belt structure 8.

The belt structure 8 may be associated with so-called "under-belt inserts" 10 placed each between the carcass ply/plies 4 and one of the axially opposite end edges of the belt structure 8. Two sidewalls 11, extending each from the respective bead 7 to a corresponding lateral edge 9a, 9b of the tread band 9, are applied in laterally opposite positions on the carcass ply/plies 4. With reference to the definitions illustrated above, in the example of tyre shown, the carcass ply/plies, the belt layers 8a, 8b, and the bead cores 6a, represent structural components, while the sidewalls 11, the liner 5, the fillers 6a, the under-belt inserts 10 and the tread band 9 represent elastomeric components.

In a preferential embodiment described herein, the device 1 is used to make the tread band 9, preferably intercalating the spiralling of a first continuous elongated element 12, during the spiralling of a second continuous elongated element 13, made of a first and a second raw elastomeric material, respectively, different from each other. More particularly, in the described example the first elastomeric material is electrically conductive, and for this purpose it can contain an adequate amount of carbon black, for example greater than 50 parts by weight on 100 parts by weight of compound. The second elastomeric material is in turn non-conductive, for example it may comprise a large amount of silica, for example greater than 30 parts by weight on 100 parts by weight of compound.

However, the present invention is conveniently usable for making by spiralling any other elastomeric component, for example sidewalls 11, liners 5, fillers 6a, under-belt inserts 10 and/or other elastomeric components needed to make the tyre 1.

Preferably, each of said first continuous elongated element 12 and second continuous elongated element 13 is shaped as a flattened tape, having two respectively opposite sides 14, spaced apart from each other according to a thickness Ti, T₂ indicatively comprised between 0.5 mm and 2 mm, for example equal to about 1 mm, and two longitudinal edges 15 reciprocally spaced according to a width Wi, W₂ indicatively comprised between 10 mm and 30 mm, for example equal to about 20 mm. In a cross-section plane, the first continuous elongated element 12 conveniently has a width W₁ slightly greater than a width W₂ of the second continuous elongated element 13.

As an indication, the difference in width Wi, W₂ between the first and second continuous elongated element 12, 13 may be between 1 mm and 6 mm.

In the apparatus 1, the first continuous elongated element 12 is arranged on a collector, preferably a feeding reel 16, rotatably supported and preferably actuatable in rotation by an actuation unit not shown, for causing and/or supporting the unwinding of the first continuous elongated element 12.

The first continuous elongated element 12 is preferably preformed by a separate extrusion process, and subsequently stored by spiralling on the feeding reel 16, preferably after applying a removable protective tape 17 to cover at least one of the opposite sides thereof.

The application of the protective tape 17 may conveniently be carried out during the making of the first continuous elongated element 12, for example exiting from the respective extruder, before the spiralling is performed on the feeding reel 16 downstream of the point of application of the same protective tape 17. During the permanence in the condition of storage on the feeding reel 16, the presence of the protective tape 17 prevents the mutual bonding of the coils, mutually superimposed in a radial direction, formed by the first continuous elongated element 12 in the raw condition.

The second continuous elongated element 13 may in turn be made directly at the apparatus 1, for example by extrusion or calendering through a respective dispenser 18. In the illustrated example, the dispenser 18 comprises an extrusion nozzle.

The dispenser 18 is configured to dispense the second continuous elongated element 13 onto a forming drum 19 which can be rotated about its own geometric rotation axis X-X, while the relative movement devices 20 between the forming drum 19 and the dispenser 18 distribute the second elongated element itself on a deposition surface 19a of the forming drum 19.

The second continuous elongated element 13 is therefore deposited by spiralling on the deposition surface 19a, to form a series of coils S₂ consecutively placed side by side and/or partially overlapped, so as to form at least one deposition layer D, continuous or in case of need subdivided into two or more parts, defining a first lateral edge 9a and a second lateral edge 9b axially opposite of the tread band 9 or other elastomeric component being processed.

The deposition surface 19a may for example be represented by an outer surface of the same forming drum 19, or by a component of the tyre 2 previously applied thereto. In particular, when the elastomeric component being processed is a tread band 9, the deposition surface 19a may be represented by the belt structure 8 previously deposited on the forming drum 19, possibly in radial overlap with respect to the carcass ply/plies 4. Preferably, immediately downstream of the dispenser 18, a primary presser is arranged that is configured for operating on the deposition surface 19a along an output direction of the second continuous elongated element 13.

The primary presser, made for example in the form of a rotatably idle pressure roller 21, is movable towards and away from the deposition surface 19a, for example on command of a movement actuator 22, for example of the fluid-dynamic type. More particularly, the primary pressure roller 21 is movable between a rest condition in which it is spaced from a deposition surface 19a, and a working condition in which it operates in thrust relation against the deposition surface 19a. During the spiralling, the pressure roller 21 acts in the working condition on the second continuous elongated element 13 at its point of application against the deposition surface 19a, promoting the adhesion thereof on the deposition surface 19a itself and/or on the previously formed coil.

In a preferential embodiment, the movement devices 20 operate directly on the forming drum 19 axially translating the same at a controlled speed during the forming of the deposition layer D, and comprise for example an anthropomorphic robotic arm having at least six movement axes.

The use of a robotic arm facilitates the distribution of the second continuous elongated element 13 with respect to the deposition surface 19a, improving the control of the deposition of the individual coils S2 according to a desired orientation.

The apparatus 1 further comprises at least one applicator roller 23, or applicator of another type, configured to apply on the deposition surface 19a the first continuous elongated element 12 coming from the feeding reel 16. The applicator roller 23 is preferably combined with an auxiliary pressure roller 24, or presser of another type, configured to operate on the deposition surface 19a and on the first continuous elongated element 12 applied thereon. The auxiliary pressure roller 24 operates in a position spaced from the applicator roller 23 along a circumferential direction, downstream of the direction of rotation of the forming drum 19.

Selective activation devices 25 are configured to move the applicator roller 23 between the rest condition and the working condition, to selectively activate and interrupt the application of the first continuous elongated element 12 on the deposition surface 19a, during the formation of the deposition layer D. Preferably, the selective activation devices 25 also cause the auxiliary pressure roller 24 to move towards and away from the deposition surface 19a.

More specifically, it is provided that the auxiliary pressure roller 24, rotatably idle, is carried by a slider 26 oscillatably constrained with respect to the dispenser 18 of the second continuous elongated element 13. Preferably, the slider 26 is slidably engaged to a support structure 27 integral with the dispenser 18, so as to be guided along a substantially radial direction with respect to the deposition surface 19a. A thrust actuator 28, for example of the fluid-dynamic type, operates between the support structure 27 and the slider 26 to move the auxiliary pressure roller 24 between a rest condition, in which the roller itself is distanced from the deposition surface 19a, and a working condition in which it operates in a thrust relation towards the latter.

A bracket 29 carrying the applicator roller 23, rotatably idle, is oscillatably constrained to the slider 26. Preferably, the bracket 29 is tiltable around an oscillation axis Y-Y preferably coinciding with the rotation axis of the auxiliary pressure roller 24 and parallel to the rotation axis of the applicator roller 23. An activation actuator 30, for example of the fluid-dynamic type, operates between the slider 26 and the bracket 29 to move the applicator roller 23 towards and away from the deposition surface 19a of the forming drum 19, between a rest condition, in which it is spaced from a deposition surface 19a, and a working condition in which it operates in a thrust relation with respect thereto. In the working condition, the applicator roller 23 operates on the deposition surface 19a along an exit direction of the second continuous elongated element 13 from the dispenser 18. The first continuous elongated element 12 therefore lends itself to being applied in an axially approached position and/or radially superimposed on at least one of the coils S₂ formed by the second continuous elongated element 13.

Guide devices 31 operate on the first continuous elongated element 12 coming from the feeding reel 16, to lead it between the deposition surface 19a and the applicator roller 23. In the illustrated example, the guide devices 31 comprise a return roller 32.

The guide devices 31 may optionally comprise a storage unit 33, for example of the festoon type, for storing a predetermined quantity of the first continuous elongated element 12 and making it available for dragging by the forming drum 19, substantially independently of the rotation speed of the feeding reel 16. The storage unit 33 may for example be operatively interposed between the return roller 32 and the feeding reel 16. Preferably, the first continuous elongated element 12 comes into contact with the applicator roller 23 on the side provided with the protective tape 17. In other words, the raw elastomeric material on the side opposite to the one carrying the protective tape 17 remains exposed to contact with the deposition surface 19a or with the coils S₂ previously formed thereon. This contact occurs following the displacement of the applicator roller 23 in the working condition.

As soon as the applicator roller 23 is brought into the working condition, the tackiness of the raw elastomeric material causes the rotation of the forming drum 19 to cause a dragging of the first continuous elongated element 12, interposed between the applicator roller 23 and the forming drum 19 themselves. The first continuous elongated element 12 is consequently drawn from the feeding reel 16 and wound according to respective circumferential coils S₁ around the deposition surface 19a.

The applicator roller 23 is preferably associated with a removal assembly 34, configured to remove the protective tape 17 from the first continuous elongated element 12 while the latter is applied around the deposition surface 19a. Preferably, the removal assembly 34 comprises a tow roller 35 and a counter-roller 36 operating against the tow roller 35 for retaining the protective tape 17 interposed therebetween. The tow roller 35 is connected to the applicator roller 23 by means of kinematic transmission members 37, comprising for example a belt transmission. The applicator roller 23, the tow roller 35 and the kinematic transmission members 37 are configured for actuating the tow roller 35 according to a peripheral speed equal to or slightly greater than the peripheral speed of the applicator roller 23. The protective tape 17, made for example of polythene, develops against the tow roller 35 a friction coefficient significantly lower than the friction coefficient generated by the raw elastomeric material constituting the first continuous elongated element 12 in contact with the deposition surface 19a and/or the previously formed coils S₂. Consequently, the different peripheral speed of the tow roller 35 with respect to the applicator roller 23 may be compensated with a slip of the tow roller 35 itself against the protective tape 17. This circumstance promotes the maintenance of an adequate tension on the protective tape 17 downstream of the applicator roller 23.

A suction duct 38 having an end arranged at the tow roller 35 collects the protective tape 17 exiting the removal assembly 34.

At the applicator roller 23, a locking element 39 may also be provided, movable towards the applicator roller 23 itself. The locking element 39 is movable between a rest position, in which it is moved away from the applicator roller 23 and from the first continuous elongated element 12, and a working position in which it operates on the first continuous elongated element 12 in thrust relation towards the applicator roller 23 itself. In the working position, the locking element 39 holds the first continuous elongated element 12 with respect to the applicator roller 23, inhibiting the reciprocal sliding thereof.

The use of the apparatus 1 provides for the first continuous elongated element 12 to be moves along its own sliding path away from the feeding reel 16, through the possible storage unit 33 and the guide devices 31, providing an end stretch 12a of the first elongated element itself against the applicator roller 23. More particularly, the end stretch 12a of the first continuous elongated element 12 is at least partially wound around the applicator roller 23, and at least one tail stretch of the protective tape 17 projecting from the end stretch 12a is conducted between the tow roller 35 and the respective counter-roller 36.

The storage unit 33 may be loaded with an adequate length, for example indicatively comprised between 2 m and 3 m, of a first continuous elongated element 12 provided by the feeding reel 16.

With the first continuous elongated element 12 arranged in the way described above, the forming of the deposition layer D may be initiated by spiralling the second continuous elongated element 13.

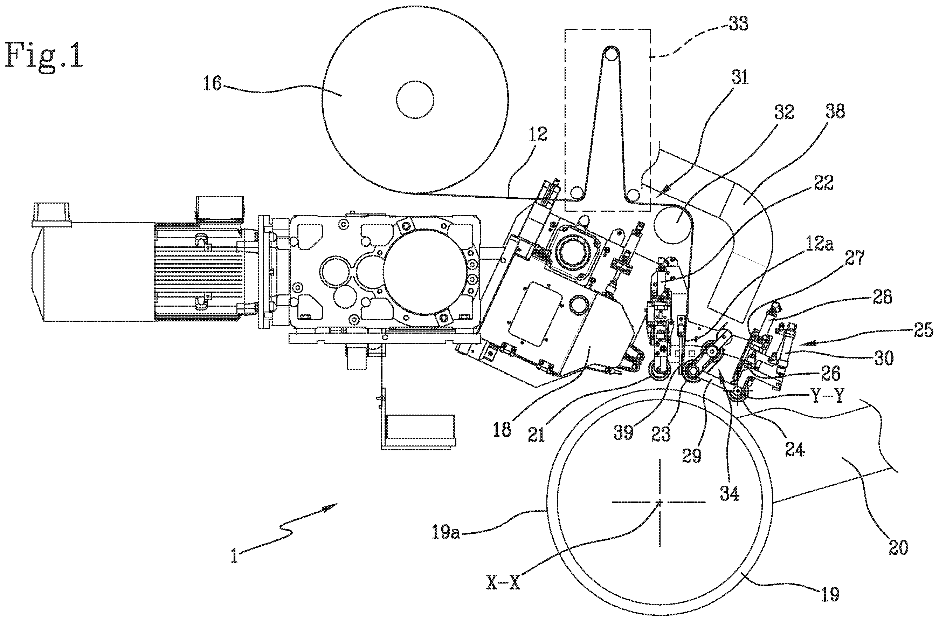

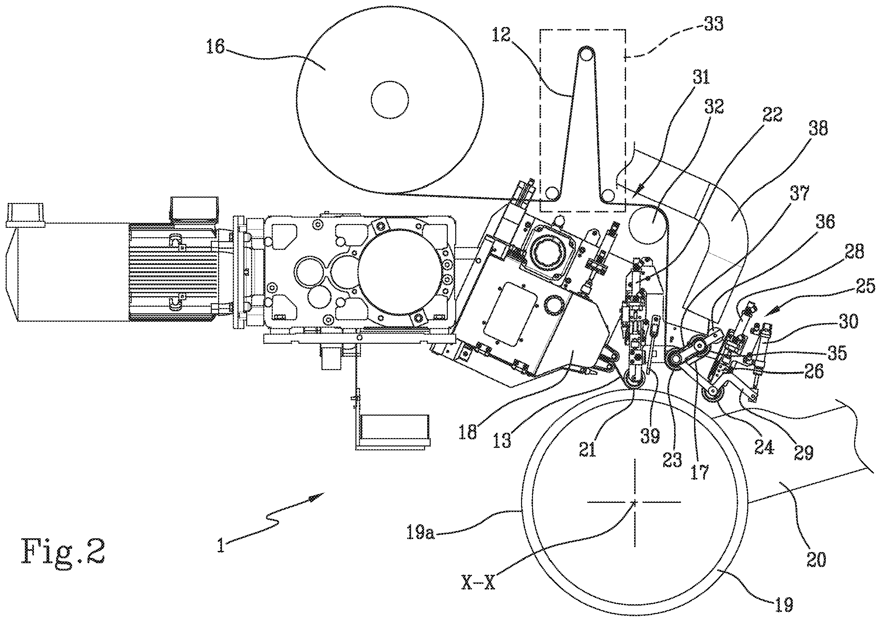

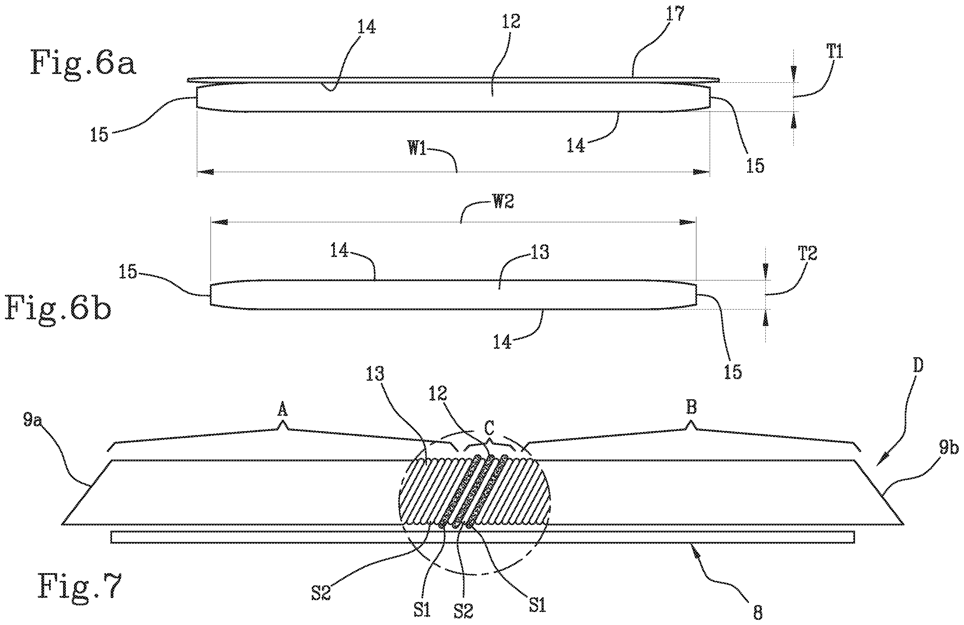

For this purpose, the forming drum 19 is positioned near the dispenser 18 indicatively as illustrated in figure 1 and actuated in rotation. The pressure roller 21 is brought into its respective working condition as shown in figure 2, to apply against the deposition surface 19a, in a position interposed between the dispenser 18 and the applicator roller 23, the second continuous elongated element 13 extruded through the dispenser 18. An axial movement imposed on the forming drum 19 causes the deposition of the second continuous elongated element 13 according to a plurality of axially side by side coils S₂, as shown in figure 7, according to a winding pitch which may be substantially equal to or slightly greater than the thickness of the second continuous elongated element itself.

Preferably, a first end portion "A" of the deposition layer D, extending from a first lateral edge 9a of the tread band 9 or other elastomeric component being processed, is formed by spiralling the second continuous elongated element 13 alone, in the manner described above.

At any desired time, it is possible to start the winding the first continuous elongated element 12, to form a central portion of the deposition layer D extending from the first end portion. Simultaneously with or after the beginning of the deposition of the first continuous elongated element 12, it is possible to interrupt the dispensing, and consequently the spiralling, of the second continuous elongated element 13. The first of the coils S₁ formed by the first continuous elongated element 12 is deposited against the last of the coils S₂ formed by the second continuous elongated element 13 before the interruption of the dispensing thereof. The coils S₁ formed with the first continuous elongated element 12 after the interruption of the dispensing of the second continuous elongated element 13 are deposited in a juxtaposition relation one against each other.

In a preferential embodiment, it is however provided that the winding of the first continuous elongated element 12 is carried out without interrupting the spiralling of the second continuous elongated element 13, and therefore simultaneously with the deposition of the latter at the central portion "C" of the deposition layer D.

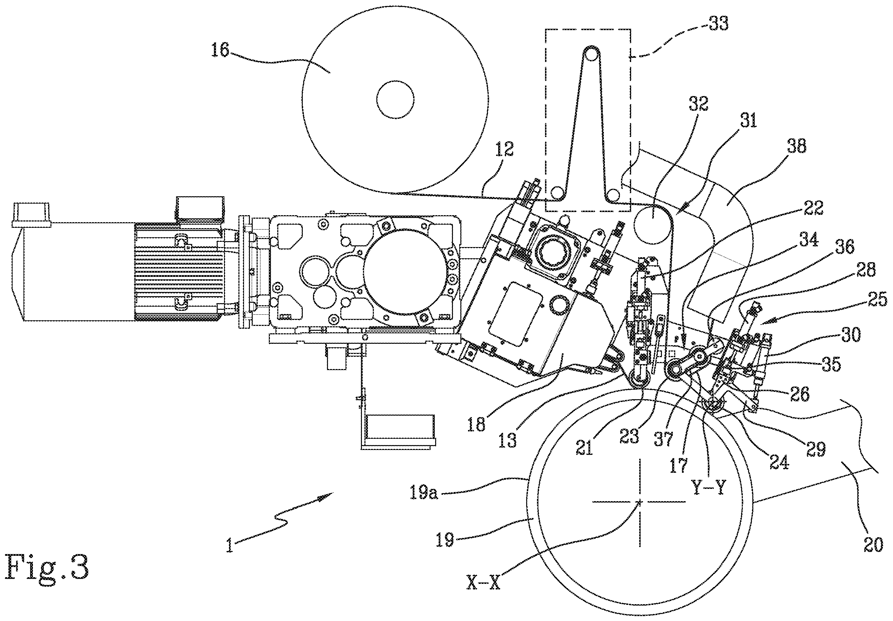

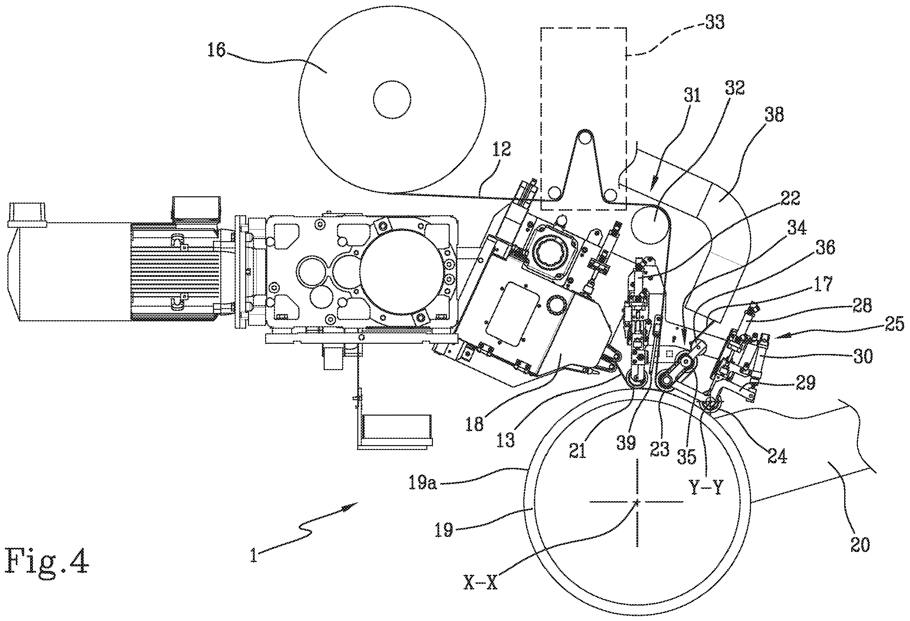

For the purpose of applying the first continuous elongated element 12 it is provided that, preferably while the forming drum 19 continues to rotate around its own rotation axis, the thrust actuator 28 is activated to bring the auxiliary pressure roller 24 into the respective operating condition, as shown in figure 3. The circumferential alignment relationship with the dispenser 18 causes the auxiliary pressure roller 24 to come into contact on the last of the coils S₁ formed by the first continuous elongated element 12, and possibly also partially on the deposition surface 19a. When the auxiliary pressure roller 24 reaches the operating condition, the activation actuator 30 is actuated which, by rotating the bracket 29, brings the applicator roller 23 closer to the forming drum 19 until the first continuous elongated element 12 is pushed towards the deposition surface 19a, as shown in figure 4. The second continuous elongated element 13 comes into contact on the last coil formed by the first continuous elongated element 12, in a contact area immediately upstream of the auxiliary pressure roller 24. Upon contact, the rotation of the forming drum 19 instantaneously causes the first continuous elongated element 12 to be dragged, thus causing the spiralling thereof to begin. During the spiralling operation, the applicator roller 23 causes the dispensing of the first continuous elongated element 12 while the auxiliary pressure roller 24, circumferentially spaced from the applicator roller 23, exerts a pressing action and consequent compacting of the first continuous elongated element 12 against the last of the coils S₂ formed by the second continuous elongated element 13.

The length of the first continuous elongated element 12 arranged in the storage unit 33 facilitates the immediate acceleration thereof as soon as the contact described above occurs, without high tensions linked to the rotation inertia of the feeding reel 16 being transmitted to the first continuous elongated element 12 , which from a standstill should instantaneously reach the application speed of the first continuous elongated element 12 on the forming drum 19. During the application, the stretch of first continuous elongated element 12 arranged in the storage unit 33 may substantially be used, and the latter may be filled again more slowly during the waiting times between one application and the other.

It may be provided that with the start of the application of the first continuous elongated element 12, an increase in the axial translation speed of the forming drum 19 is controlled, so as to compensate with a suitable increase of the winding pitch the simultaneous application of the first elongated element continuous 12 and of the second continuous elongated element 13. In particular, if the first continuous elongated element 12 and the second continuous elongated element 13 have the same thickness, it will be conveniently possible to double the axial movement pitch of the drum to keep the number of coils Si, S₂ formed with both continuous elongated elements 12, 13 constant for each centimetre or other linear unit in the axial dimension of the tread band 9.

During the spiralling of the first continuous elongated element 12, the rotation transmitted to the tow roller 35 causes the protective tape 17 to be removed and moved away from the same first continuous elongated element 12 downstream of the applicator roller 23, to be collected through the suction duct 38. The circumferential alignment relationship between the applicator roller 23 and the dispenser 18 causes the first continuous elongated element 12 to be placed in a symmetrically centred position with respect to the adjacent circumferential coil S₂ formed by the second continuous elongated element 13. As a consequence, each of the circumferential coils S₁ formed by the first continuous elongated element 12 is symmetrically centred with respect to the adjacent coils S₂ formed by the second continuous elongated element 13.

Once the deposition has taken place, due to the smaller width W₂ of the second continuous elongated element 13 with respect to the first continuous elongated element 12, in each of the circumferential coils S₁ formed by the latter the longitudinal edges 15 of the first continuous elongated element itself project radially with respect to the adjacent coils S₂ formed by the second continuous elongated element 13 (figure 7). This condition promotes a satisfactory electrical continuity between the outer surface of the resulting tread band and the belt structure 8 and/or other radially inner components of the tyre with respect to the tread band 9.

The spiralling of the first continuous elongated element 12 may be interrupted at any time, at the end of the deposition of a desired number of coils Si, preferably keeping the forming drum 19 in rotation. It is therefore not necessary to interrupt also the spiralling of the second continuous elongated element 13, if still in progress.

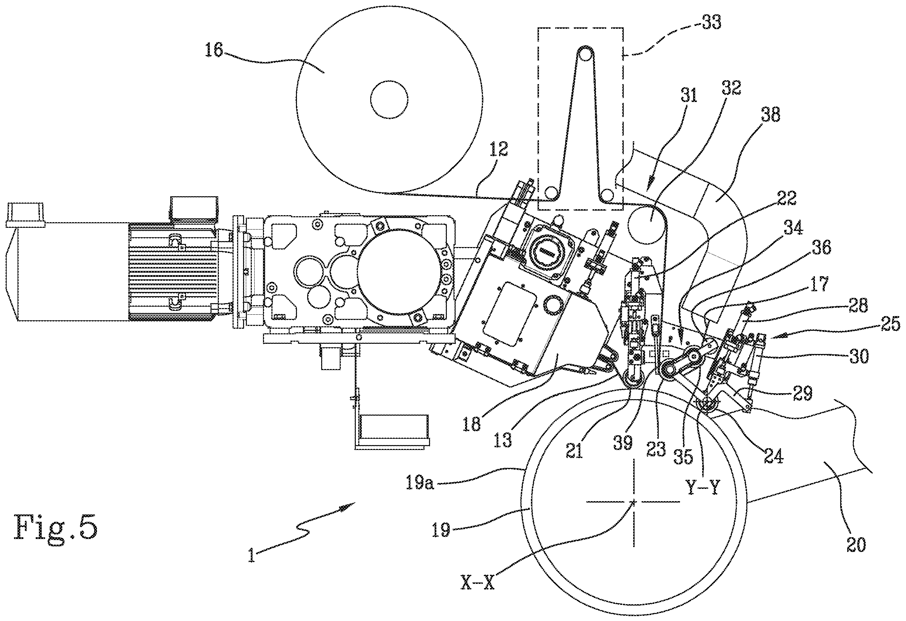

To this end, the applicator roller 23 is moved away from the deposition surface 19a by the activation actuator 30 as shown in figure 5, while the thrust actuator 28 keeps the auxiliary pressure roller 24 in its operative condition. At the same time, the locking element 39 is activated to retain the first continuous elongated element 12 against the applicator roller 23.

In addition or as an alternative to the locking element 39, a brake operating on the applicator roller 23 may be activated to brake the rotation thereof.

The rotation of the forming drum 19 imposes a traction action on the first continuous elongated element 12 until it causes the rupture thereof in the section comprised between the auxiliary pressure roller 24 and the applicator roller 23. The cut end dragged in the rotation of the forming drum 19 is subjected to the action of the auxiliary pressure roller 24 which ends its application against the last previously formed coil.

The auxiliary pressure roller 24 is returned to the rest condition and the dispensing of the second continuous elongated element 13 is possibly resumed, if previously interrupted, or kept active to complete the construction of the tread band 9 or other elastomeric component, by forming a second end portion "B" of the deposition layer D, extending from the central portion "C" up from a second lateral edge 9b of the tread band itself.

## Claims

1. Process for building tyres for vehicle wheels, comprising:
forming a first continuous elongated element (12) made with a first raw elastomeric material;
storing said first continuous elongated element (12) on a feeding reel (16);
extruding a second continuous elongated element (13) made with a second raw elastomeric material different from said first raw elastomeric material;
forming at least one deposition layer (D) by spiralling said second continuous elongated element (13) on a deposition surface (19a) of a forming drum (19) actuated in rotation;
at the same time as forming the deposition layer (D), taking said first continuous longitudinal element (12) from said feeding reel (16) and winding it on said deposition surface (19a) according to coils (Si) consecutively side by side and axially interposed between coils (S₂) formed by said second continuous elongated element (13); wherein the winding of the first continuous elongated element (12) comprises approaching an applicator (23) to said forming drum (19), and pushing the first continuous elongated element (12) against said deposition surface (19a);
moving the applicator (23) away from the forming drum (19) kept in rotation to interrupt the winding of the first continuous elongated element (12).

2. Process as claimed in claim 1, wherein the forming of the deposition layer (D) comprises:
forming on the deposition surface (19a) a first end portion (A) of said deposition layer (D) extending from a first lateral edge (9a) of the elastomeric component;
winding the first continuous elongated element (12) to form a central portion (C) of the deposition layer (D) extending from the first end portion;
forming on the deposition surface (19a) a second end portion (B) of said deposition layer (D) extending from the central portion (C) up to a second lateral edge (9b) of the elastomeric component (9).

3. Process as claimed in claim 1 or 2, wherein it is provided to axially translate the forming drum (19) during the forming of the deposition layer (D), and
wherein, with the winding of the first continuous elongated element (12), an increase of the axial translation speed of the forming drum (19) is actuated.

4. Process as claimed in one or more of the preceding claims, wherein the winding of the first continuous elongated element (12) comprises arranging an end stretch (12a) of the first continuous elongated element (12) against said applicator (23) arranged in the vicinity of the forming drum (19).

5. Process as claimed in one or more of the preceding claims, wherein the winding of the first continuous elongated element (12) comprises dragging the first continuous elongated element (12) in the rotation of the forming drum (19),
wherein during the dragging, the first continuous elongated element (12) is subjected to a pressing by an auxiliary presser (24) operating in a position spaced from the applicator (23) along a circumferential direction with respect to the deposition surface (19a).

6. Process as claimed in claim 5, wherein the winding of the first continuous elongated element (12) is interrupted by keeping the forming drum (19) in rotation, by the actions of:
moving the applicator (23) away from the forming drum (19) maintaining the action of the auxiliary presser (24) against the first continuous elongated element (12);
retaining the first continuous elongated element (12) at the applicator (23) to break the same due to the traction action generated between the applicator (23) and the auxiliary presser (24).

7. Process as claimed in claim 5, wherein retaining the first continuous elongated element (12) comprises braking the rotation of an applicator roller (23) constituting said applicator (23).

8. Process as claimed in claim 6 or 7, wherein retaining the first continuous elongated element (12) comprises braking the latter against the applicator (23) by means of a locking element (39) movable towards the applicator (23).

9. Process as claimed in one or more of the preceding claims, wherein forming said first continuous elongated element (12) comprises:
extruding a continuous elongated element;
applying a removable protective tape (17) along at least one side of said continuous elongated element,
wherein during the winding of the first continuous elongated element (12), the protective tape (17) is driven away from the first continuous elongated element (12) itself downstream of the applicator (23).

10. Apparatus for building tyres for vehicle wheels, comprising:
a forming drum (19) actuatable in rotation about a geometric rotation axis (X-X) thereof;
a feeding reel (16) carrying a first continuous elongated element (12) made with a first raw elastomeric material;
a dispenser (18) of a second continuous elongated element (13) comprising an extruder configured to extrude said second continuous elongated element (13) made with a second raw elastomeric material different from said first raw elastomeric material;
devices (20) for relative movement between said forming drum (19) and said dispenser (18) configured for spiralling said second continuous elongated element (13) on a deposition surface (19a) of the forming drum (19), thus forming at least one deposition layer (D);
an applicator (23) configured for applying on the deposition surface (19a) the first continuous elongated element (12) coming from said feeding reel (16), wherein the applicator (23) operates on the deposition surface (19a) along an output direction of the second continuous elongated element (13) from said dispenser (18), to apply the first continuous elongated element (12) in a position axially side by side to at least one coil formed by said second continuous elongated element (13);
selective activation devices (25) of the applicator (23) for selectively activating and interrupting the application of the first continuous elongated element (12) on the deposition surface (19a), during the formation of the deposition layer (D).

11. Apparatus as claimed in claim 10, wherein the selective activation devices (25) comprise a bracket (29) oscillatably constrained with respect to the dispenser (18) and carrying said applicator (23), and an activation actuator (30) operating on the bracket (29) to move the applicator (23) between a rest condition and a working condition.

12. Apparatus as claimed in one or more of claims 10 to 11, further comprising an auxiliary presser (24) configured for operating on the deposition surface (19a) in a position spaced from the applicator (23) along a circumferential direction.

13. Apparatus as claimed in one or more of claims 10 to 12, further comprising a removal assembly (34) operatively associated with said applicator (23) for removing a protective tape (17) from the first continuous elongated element (12) coming from the feeding reel (16).

14. Apparatus as claimed in one or more of claims 10 to 13, further comprising a primary presser (21) configured for operating on the deposition surface (19a) along an output direction of the second continuous elongated element (13) from said dispenser (18).

15. Apparatus as claimed in one or more of claims 10 to 14, further comprising a locking element (39) movable towards the applicator (23) for retaining the first continuous elongated element (12) against the applicator (23).

## Patentansprüche

1. Verfahren zur Herstellung von Reifen für Fahrzeugräder, umfassend:
Bilden eines ersten durchgehenden länglichen Elements (12), das aus einem ersten Elastomer-Ausgangsmaterial hergestellt ist;
Speichern des ersten durchgehenden länglichen Elements (12) auf einer Zuführrolle (16);
Extrudieren eines zweiten durchgehenden länglichen Elements (13), das aus einem zweiten Elastomer-Ausgangsmaterial hergestellt ist, das sich von dem ersten Elastomer-Ausgangsmaterial unterscheidet;
Bilden zumindest einer Abscheidungslage (D) durch Aufwickeln des zweiten durchgehenden länglichen Elements (13) auf eine Ablageoberfläche (19a) einer Formungstrommel (19), die in Drehung versetzt ist;
gleichzeitig mit dem Bilden der Abscheidungslage (D), Abnehmen des ersten durchgehenden länglichen Elements (12) von der Zuführrolle (16) und Aufwickeln auf die Ablageoberfläche (19a) in Windungen (S1), Seite an Seite aufeinanderfolgend zwischen Windungen (S1), die durch das zweite durchgehende längliche Element (13) gebildet werden; wobei das Wickeln des ersten durchgehenden länglichen Elements (12) das Annähern eines Applikators (23) an die Formungstrommel (19) und das Drücken des ersten durchgehenden länglichen Elements (12) gegen die Ablageoberfläche (19a) umfasst;
Bewegen des Applikators (23) weg von der Formungstrommel (19), die in Drehung gehalten wird, um das Wickeln des ersten durchgehenden länglichen Elements (12) zu unterbrechen.

2. Verfahren nach Anspruch 1, wobei das Bilden der Abscheidungslage (D) umfasst:
Bilden, auf der Ablageoberfläche (19a), eines ersten Endabschnitts (A) der Abscheidungslage (D), die sich von einem ersten Seitenrand (9a) der Elastomerkomponente erstreckt;
Wickeln des ersten durchgehenden länglichen Elements (12), um einen zentralen Abschnitt (C) der Abscheidungslage (D) zu bilden, der sich von dem ersten Endabschnitt weg erstreckt;
Bilden auf der Ablageoberfläche (19a) eines zweiten Endabschnitts (B) der Abscheidungslage (D), der sich von dem zentralen Abschnitt (C) bis zu einem zweiten Seitenrand (9b) der ElastomerKomponente (9) erstreckt.

3. Verfahren nach Anspruch 1 oder 2, wobei vorgesehen ist, die Formungstrommel (19) während des Bildens der Abscheidungslage (D) axial zu verschieben, und
wobei, mit dem Wickeln des ersten durchgehenden länglichen Elements (12), eine Zunahme der axialen Verschiebungsgeschwindigkeit der Formungstrommel (19) betätigt wird.

4. Verfahren nach einem oder mehreren der vorhergehenden Ansprüche, wobei das Wickeln des ersten durchgehenden länglichen Elements (12) das Anordnen eines Endstücks (12a) des ersten durchgehenden länglichen Elements (12) gegen den Applikator (23), der in der Nähe der Formungstrommel (19) angeordnet ist, umfasst.

5. Verfahren nach einem oder mehreren der vorhergehenden Ansprüche, wobei das Wickeln des ersten durchgehenden länglichen Elements (12) das Mitnehmen des ersten durchgehenden länglichen Elements (12) in der Drehung der Formungstrommel (19) umfasst,
wobei während des Mitnehmens das erste durchgehende längliche Element (12) einem Andrücken durch einen Hilfsandrücker (24) unterworfen wird, der in einer Position, die von dem Applikator (23) entlang einer Umfangsrichtung in Bezug auf die Ablageoberfläche (19a) beabstandet ist, arbeitet.

6. Verfahren nach Anspruch 5, wobei das Wickeln des ersten durchgehenden länglichen Elements (12) durch die folgenden Vorgänge unterbrochen wird, während die Formungstrommel (19) in Drehung gehalten wird:
Bewegen des Applikators (23) von der Formungstrommel (19) weg, während die Wirkung des Hilfsandrückers (24) gegen das erste durchgehende längliche Element (12) aufrechterhalten wird;
Zurückhalten des ersten durchgehenden länglichen Elements (12) an dem Applikator (23), um dasselbe aufgrund der Traktionswirkung, die zwischen dem Applikator (23) und dem Hilfsandrücker (24) erzeugt wird, abzubrechen.

7. Verfahren nach Anspruch 5, wobei das Zurückhalten des ersten durchgehenden länglichen Elements (12) das Abbremsen der Drehung einer Applikatorrolle (23) umfasst, welche den Applikator (23) bildet.

8. Verfahren nach Anspruch 6 oder 7, wobei das Zurückhalten des ersten durchgehenden länglichen Elements (12) das Abbremsen des letzteren gegen den Applikator (23) mittels eines Sicherungselements (39) umfasst, das zu dem Applikator (23) beweglich ist.

9. Verfahren nach einem oder mehreren der vorhergehenden Ansprüche, wobei das Bilden des ersten durchgehenden länglichen Elements (12) umfasst:
Extrudieren eines durchgehenden länglichen Elements;
Anbringen eines entfernbaren Schutzbands (17) entlang zumindest einer Seite des durchgehenden länglichen Elements,
wobei während des Wickelns des ersten durchgehenden länglichen Elements (12) das Schutzband (17) von dem ersten durchgehenden länglichen Element (12) selbst dem Applikator (23) nachgelagert weggeführt wird.

10. Vorrichtung zur Fertigung von Reifen für Fahrzeugräder, wobei die Vorrichtung umfasst:
eine Formungstrommel (19), die um eine geometrische Drehachse (X-X) davon in Drehung versetzbar ist;
eine Zuführrolle (16), die ein erstes durchgehendes längliches Element (12) trägt, das aus einem ersten Elastomer-Ausgangsmaterial hergestellt ist;
eine Ausgabevorrichtung (18) für ein zweites durchgehendes längliches Element (13), umfassend einen Extruder, der dazu ausgestaltet ist, das zweite durchgehende längliche Element (13) zu extrudieren, das aus einem zweiten Elastomer-Ausgangsmaterial hergestellt ist, das sich von dem ersten Elastomer-Ausgangsmaterial unterscheidet;
Einrichtungen (20) für die relative Bewegung zwischen der Formungstrommel (19) und der Ausgabevorrichtung (18), die dazu ausgestaltet sind, das zweite durchgehende längliche Element (13) auf einer Ablageoberfläche (19a) der Formungstrommel (19) aufzuwickeln, und so zumindest eine Abscheidungslage (D) zu bilden;
einen Applikator (23), der dazu ausgestaltet ist, auf der Ablageoberfläche (19a) das erste durchgehende längliche Element (12) aufzubringen, das von der Zuführrolle (16) kommt, wobei der Applikator (23) auf der Ablageoberfläche (19a) entlang einer Ausgaberichtung des zweiten durchgehenden länglichen Elements (13) von der Ausgabevorrichtung (18) arbeitet, um das erste durchgehende längliche Element (12) in einer Position axial Seite an Seite auf zumindest eine Windung aufzubringen, die durch das zweite durchgehende längliche Element (13) gebildet wird;
selektive Betätigungseinrichtungen (25) für den Applikator (23), um während der Bildung der Abscheidungslage (D) selektiv die Aufbringung des ersten durchgehenden länglichen Elements (12) auf der Ablageoberfläche (19a) zu aktivieren und zu unterbrechen.

11. Vorrichtung nach Anspruch 10, wobei die selektiven Betätigungseinrichtungen (25) einen Haltearm (29) umfassen, der oszillierbar in Bezug auf die Ausgabevorrichtung (18) gehalten wird und den Applikator (23) trägt, sowie ein Betätigungsstellglied (30), das auf den Haltearm (29) wirkt, um den Applikator (23) zwischen einem Ruhezustand und einem Arbeitszustand zu bewegen.

12. Vorrichtung nach einem oder mehreren der Ansprüche 10 bis 11. ferner umfassend einen Hilfsandrücker (24), der dazu ausgestaltet ist, auf die Ablageoberfläche (19a) in einer Position zu wirken, die von dem Applikator (23) entlang einer Umfangsrichtung beabstandet ist.

13. Vorrichtung nach einem oder mehreren der Ansprüche 10 bis 12, ferner umfassend eine Entfernungsanordnung (34), die dem Applikator (23) wirkmäßig zugeordnet ist, um ein Schutzband (17) von dem ersten durchgehenden länglichen Element (12), das von der Zuführrolle (16) kommt, zu entfernen.

14. Vorrichtung nach einem oder mehreren der Ansprüche 10 bis 13, ferner umfassend einen primären Andrücker (21), der dazu ausgestaltet ist, auf die Ablageoberfläche (19a) entlang einer Ausgaberichtung des zweiten durchgehenden länglichen Element (13) von der Ausgabevorrichtung (18) zu wirken.

15. Vorrichtung nach einem oder mehreren der Ansprüche 10 bis 14, ferner umfassend ein Sicherungselement (39), das zu dem Applikator (23) hin beweglich ist, um das erste durchgehende längliche Element (12) gegen den Applikator (23) zu halten.

## Revendications

1. Procédé de construction de pneus pour roues de véhicule, comprenant le fait :
de former un premier élément allongé continu (12) réalisé avec une première matière première élastomère ;
de ranger ledit premier élément allongé continu (12) sur une bobine d'alimentation (16) ;
d'extruder un deuxième élément allongé continu (13) réalisé avec une deuxième matière première élastomère différente de ladite première matière première élastomère ;
de former au moins une couche de dépôt (D) en spiralant ledit deuxième élément allongé continu (13) sur une surface de dépôt (19a) d'un tambour de formation (19) actionné en rotation ;
en même temps que la formation de la couche de dépôt (D), de prélever ledit premier élément longitudinal continu (12) de ladite bobine d'alimentation (16) et de l'enrouler sur ladite surface de dépôt (19a) selon des enroulements (Si) consécutivement côte à côte et interposés axialement entre des enroulements (S₂) formés par ledit deuxième élément allongé continu (13) ; où l'enroulement du premier élément allongé continu (12) comprend le fait de rapprocher un applicateur (23) dudit tambour de formation (19) et de pousser le premier élément allongé continu (12) contre ladite surface de dépôt (19a) ;
d'éloigner l'applicateur (23) du tambour de formation (19) maintenu en rotation pour interrompre l'enroulement du premier élément allongé continu (12).

2. Procédé tel que revendiqué dans la revendication 1, dans lequel la formation de la couche de dépôt (D) comprend le fait :
de former sur la surface de dépôt (19a) une première partie d'extrémité (A) de ladite couche de dépôt (D) s'étendant à partir d'un premier bord latéral (9a) du composant élastomère ;
d'enrouler le premier élément allongé continu (12) pour former une partie centrale (C) de la couche de dépôt (D) s'étendant à partir de la première partie d'extrémité ;
de former sur la surface de dépôt (19a) une deuxième partie d'extrémité (B) de ladite couche de dépôt (D) s'étendant de la partie centrale (C) jusqu'à un deuxième bord latéral (9b) du composant élastomère (9).

3. Procédé tel que revendiqué dans la revendication 1 ou 2, dans lequel il est prévu d'effectuer une translation axiale du tambour de formation (19) lors de la formation de la couche de dépôt (D), et
dans lequel, avec l'enroulement du premier élément allongé continu (12), une augmentation de la vitesse de translation axiale du tambour de formation (19) est activée.

4. Procédé tel que revendiqué dans une ou plusieurs des revendications précédentes, dans lequel l'enroulement du premier élément allongé continu (12) comprend le fait d'agencer un tronçon d'extrémité (12a) du premier élément allongé continu (12) contre ledit applicateur (23) agencé à proximité du tambour de formation (19).

5. Procédé tel que revendiqué dans une ou plusieurs des revendications précédentes, dans lequel l'enroulement du premier élément allongé continu (12) comprend le fait d'entraîner le premier élément allongé continu (12) dans la rotation du tambour de formation (19),
dans lequel pendant l'entraînement, le premier élément allongé continu (12) est soumis à une pression par un presseur auxiliaire (24) fonctionnant dans une position espacée de l'applicateur (23) le long d'une direction circonférentielle par rapport à la surface de dépôt (19a).

6. Procédé tel que revendiqué dans la revendication 5, dans lequel l'enroulement du premier élément allongé continu (12) est interrompu par le maintien du tambour de formation (19) en rotation, par les actions consistant à :
éloigner l'applicateur (23) du tambour de formation (19) maintenant l'action du presseur auxiliaire (24) contre le premier élément allongé continu (12) ;
retenir le premier élément allongé continu (12) au niveau de l'applicateur (23) pour rompre celui-ci en raison de l'action de traction générée entre l'applicateur (23) et le presseur auxiliaire (24).

7. Procédé tel que revendiqué dans la revendication 5, dans lequel la retenue du premier élément allongé continu (12) comprend le fait de freiner la rotation d'un rouleau applicateur (23) constituant ledit applicateur (23).

8. Procédé tel que revendiqué dans la revendication 6 ou 7, dans lequel la retenue du premier élément allongé continu (12) comprend le fait de freiner ce dernier contre l'applicateur (23) au moyen d'un élément de verrouillage (39) pouvant se déplacer vers l'applicateur (23).

9. Procédé tel que revendiqué dans une ou plusieurs des revendications précédentes, dans lequel la formation dudit premier élément allongé continu (12) comprend le fait :
d'extruder un élément allongé continu ;
d'appliquer un ruban de protection amovible (17) le long d'au moins un côté dudit élément allongé continu,
dans lequel pendant l'enroulement du premier élément allongé continu (12), le ruban de protection (17) est entraîné à l'écart du premier élément allongé continu (12) lui-même en aval de l'applicateur (23).

10. Appareil de construction de pneus pour roues de véhicules, comprenant :
un tambour de formation (19) pouvant être actionné en rotation autour d'un axe de rotation géométrique (X-X) de celui-ci ;
une bobine d'alimentation (16) portant un premier élément allongé continu (12) réalisé avec une première matière première élastomère ;
un distributeur (18) d'un deuxième élément allongé continu (13) comprenant une extrudeuse configurée pour extruder ledit deuxième élément allongé continu (13) réalisé avec une deuxième matière première élastomère différente de ladite première matière première élastomère ;
des dispositifs (20) pour un mouvement relatif entre ledit tambour de formation (19) et ledit distributeur (18) configurés pour spiraler ledit deuxième élément allongé continu (13) sur une surface de dépôt (19a) du tambour de formation (19), formant ainsi au moins une couche de dépôt (D) ;
un applicateur (23) configuré pour appliquer sur la surface de dépôt (19a) le premier élément allongé continu (12) provenant de ladite bobine d'alimentation (16), où l'applicateur (23) agit sur la surface de dépôt (19a) le long d'une direction de sortie du deuxième élément allongé continu (13) dudit distributeur (18), pour appliquer le premier élément allongé continu (12) dans une position axialement côte à côte par rapport à au moins un enroulement formé par ledit deuxième élément allongé continu (13) ;
des dispositifs d'activation sélective (25) de l'applicateur (23) pour activer et interrompre sélectivement l'application du premier élément allongé continu (12) sur la surface de dépôt (19a), lors de la formation de la couche de dépôt (D).

11. Dispositif tel que revendiqué dans la revendication 10, dans lequel les dispositifs d'activation sélective (25) comprennent un support (29) contraint en oscillation par rapport au distributeur (18) et portant ledit applicateur (23), et un actionneur d'activation (30) agissant sur le support (29) pour déplacer l'applicateur (23) entre une condition de repos et une condition de travail.

12. Appareil tel que revendiqué dans une ou plusieurs des revendications 10 et 11, comprenant en outre un presseur auxiliaire (24) configuré pour agir sur la surface de dépôt (19a) dans une position espacée de l'applicateur (23) le long d'une direction circonférentielle.

13. Appareil tel que revendiqué dans une ou plusieurs des revendications 10 à 12, comprenant en outre un ensemble de retrait (34) fonctionnellement associé audit applicateur (23) pour retirer un ruban de protection (17) du premier élément allongé continu (12) provenant de la bobine d'alimentation (16).

14. Appareil tel que revendiqué dans une ou plusieurs des revendications 10 à 13, comprenant en outre un presseur primaire (21) configuré pour agir sur la surface de dépôt (19a) le long d'une direction de sortie du deuxième élément allongé continu (13) dudit distributeur (18).

15. Appareil tel que revendiqué dans une ou plusieurs des revendications 10 à 14, comprenant en outre un élément de verrouillage (39) pouvant se déplacer vers l'applicateur (23) pour retenir le premier élément allongé continu (12) contre l'applicateur (23).
